# EUROPÄISCHE PATENTSCHRIFT

(11) **EP 3 733 314 B1**
(45) Veröffentlichungstag und Bekanntmachung des Hinweises auf die Patenterteilung: **16.03.2022**
(21) Anmeldenummer: 20172042.2
(22) Anmeldetag: 29.04.2020
(51) Int. Cl.: B07C 5/36, B65G 47/51

(54) **AUSSCHLEUSEVORRICHTUNG**
EXTRACTOR DEVICE
DISPOSITIF D'ÉVACUATION

(30) Priorität: 03.05.2019 DE 102019111515
(43) Veröffentlichungstag der Anmeldung: 04.11.2020
(73) Patentinhaber: WIPOTEC GmbH, 67657 Kaiserslautern (DE)
(72) Erfinder: Düppre, Theo, 67663 Kaiserslautern (DE)
(74) Vertreter: Eder Schieschke & Partner mbB

(56) Entgegenhaltungen:
- EP-A2- 0 059 984
- WO-A1-98/16450
- WO-A1-2017/192783
- DD-A7- 301 154
- DE-A1- 4 329 193
- FR-A1- 2 792 555

## Beschreibung

Die vorliegende Erfindung betrifft eine Ausschleuse-/Sortiervorrichtung zum Ausschleusen von diskreten Produkten aus einem Produktstrom.

Eine solche Vorrichtung, die den Obergriff des Anspruchs 1 zeigt, wird in Dokument WO 98/16450 offenbart.

Zum Sortieren von Produkten nach speziellen Produkteigenschaften werden oft Sortiervorrichtungen stromabwärts hinter Inspektionssystemen eingesetzt. Spezielle Produkteigenschaften führen nach vorbestimmten Kriterien dazu, dass ein Produkt entweder weiter entlang des Förderwegs transportiert oder aus dem Förderweg ausgeschleust wird. Eine spezielle Produkteigenschaft kann beispielsweise das Produktgewicht oder die Kontamination eines Produkts mit Fremdkörpern sein. Für die Kontrolle (Ermittlung und Bewertung) des Produktgewichts werden oft selbsttätige Kontrollwaagen eingesetzt. Zum Aussortieren bei Kontamination von Produkten können Inspektionsgeräte mit Röntgen- oder Terahertz-Strahlen verwendet werden. Bei der Qualitätskontrolle von pharmazeutischen Produkten werden oft optische Kontrollsysteme verwendet, die einen speziellen Code auf dem Produkt oder dessen Verpackung erkennen und bewerten. Bei den vorgenannten Systemen erfolgt das Ausschleusen eines Produkts aus dem Förderweg meist in Querrichtung zur Förderrichtung hierzu. Die ausgeschleusten Produkte werden in Auffangbehältern gesammelt. Meist müssen entsprechende Sortiervorrichtungen in beengten Platzverhältnissen untergebracht werden. Das ist insbesondere dann der Fall, wenn schon bestehende Inspektionssysteme im Feld mit einer Sortiervorrichtung nachgerüstet werden sollen, oder eine bestehende Sortiervorrichtung weiteren zusätzlichen Sortierkriterien genügen soll. Die Baulänge der Sortiervorrichtung soll möglichst gering gehalten werden. Sollen die Produkte eines Produktstroms nach mehreren verschiedenen Kriterien, beispielsweise nach Kontamination oder Gewicht der Produkte, sortiert werden, so wird entsprechend viel Bauraum für mehrere Auffangbehälter benötigt.

Es ist deshalb die Aufgabe der vorliegenden Erfindung, eine Ausschleuse-/Sortiervorrichtung sowie eine Verwendung der Vorrichtung zum Ausschleusen von Produkten aus einem Produktstrom bereitzustellen, mit welcher die erforderliche Baulänge entlang der Ausschleuse-/Sortiervorrichtung möglichst gering gehalten wird. Dies ist insbesondere dann notwendig, wenn schon bestehende Inspektionssysteme im Feld mit einer Sortiervorrichtung nachgerüstet werden sollen. Die ausgeschleusten Produkte sollen allen Auffangbehältern zudem von der Operatorseite her entnommen werden können.

Hierfür stellt die vorliegende Erfindung eine Ausschleusevorrichtung gemäß Anspruch 1 sowie eine Verwendung der Vorrichtung gemäß Anspruch 10 zum Ausschleusen von diskreten Produkten aus einem Produktstrom bereit. Die Ausschleusevorrichtung weist ein Transportmittel, mindestens ein Ausschleusemittel und mindestens zwei Auffangbehälter auf. Über das Transportmittel führt ein Förderweg zum Fördern der Produkte in einer Förderrichtung X. Das Ausschleusemittel dient zum Ausschleusen der Produkte aus dem Förderweg wahlweise zu einer der zwei gegenüberliegenden Seiten des Transportmittels. Die zwei gegenüberliegenden Seiten befinden sich im Wesentlichen in der Querrichtung Y zur Förderrichtung X, d.h. Förderrichtung und Querrichtung erstrecken sich im Wesentlichen senkrecht zueinander. Im Folgenden werden die zwei gegenüberliegenden Seiten als "erste und zweite Seite" bezeichnet. Die erste Seite ist zudem die Operatorseite, auf der sich das Bedienpersonal des Inspektionssystems befindet. Die mindestens zwei Auffangbehälter dienen jeweils zum Aufnehmen der von dem Ausschleusemittel aus dem Förderweg ausgeschleusten Produkte. Die Ausschleusevorrichtung ist dadurch gekennzeichnet, dass die mindestens zwei Auffangbehälter in einer Richtung Z zumindest teilweise übereinander angeordnet sind, wobei sich die Richtung Z senkrecht zu der Förderrichtung X und senkrecht zu der Querrichtung Y erstreckt. Weiterhin ist die Ausschleusevorrichtung dadurch gekennzeichnet, dass die mindestens zwei Auffangbehälter so angeordnet sind, dass die Produkte aus allen der mindestens zwei Auffangbehälter von der gleichen Seite des Transportmittels entnommen werden können, vorzugsweise von der ersten Seite, auf der sich auch ein Bedienterminal zum Bedienen des Inspektionssystems befinden kann. Dafür ist es bevorzugt, dass alle der mindestens zwei Behälter zumindest teilweise auf der gleichen Seite der zwei gegenüberliegenden Seiten des Transportmittels angeordnet sind.

Unter diskreten Produkten sollen hierin Produkte verstanden werden, die nicht in Form eines Schüttguts, sondern vorzugsweise einstückig vorliegen.

Das Transportmittel kann die Produkte aktiv oder passiv fördern. Ein aktiv förderndes Transportmittel ist beispielsweise ein Gurtförderer, Modulbandförderer, Zahnriemenförderer, Kettenförderer, Plattenkettenbandförderer oder Scharnierbandförderer. Ein passiv förderndes Transportmittel ist beispielsweise eine Gleitebene, entlang der die Produkte gleiten können.

Wie einleitend bereits genannt, kann die erfindungsgemäße Ausschleusevorrichtung bei Inspektionssystemen verwendet werden, die eine selbsttätige Kontrollwaage und/oder ein Inspektionsgerät mit Röntgen- oder Terahertzstrahlen und/oder ein optisches Kontrollsystem zur Codeerkennung auf Produkten oder deren Verpackungen, insbesondere Verpackungen im pharmazeutischen Bereich, aufweisen. Deshalb betrifft die vorliegende Erfindung auch die entsprechende Verwendung der erfindungsgemäßen Ausschleusevorrichtung. Die selbsttätigen Kontrollwaagen, Inspektionsgeräte oder optischen Kontrollsysteme dienen dabei der Erkennung und Bewertung spezieller Produkteigenschaften. Nach vorbestimmten Kriterien können dann die Produkte gemäß ihren individuellen Produkteigenschaften entweder weiter entlang des Förderwegs transportiert oder aus dem Förderweg ausgeschleust werden.

Die mindestens zwei Auffangbehälter sind in der Richtung Z zumindest teilweise übereinander angeordnet, wobei die Richtung Z vorzugsweise senkrecht zu der Ebene steht, die von der Förderrichtung X und der Querrichtung Y aufgespannt wird. "Zumindest teilweise übereinander angeordnet" bedeutet, dass sich die Grundflächen der mindestens zwei Auffangbehälter wenigstens teilweise überlappen. Die mindestens zwei Auffangbehälter können deckungsgleiche Grundflächen haben. Die zwei Auffangbehälter können aber auch unterschiedliche Grundflächen aufweisen. Dann kann sich der eine der Auffangbehälter beispielsweise bis unterhalb des Transportmittels in Querrichtung Y erstrecken, wie es weiter unten hierin beschrieben ist.

In einer Ausgestaltung der Erfindung ist die erfindungsgemäße Ausschleusevorrichtung vorzugsweise so ausgebildet, dass sich die Produkte beim Ausschleusen aus dem Förderweg zur ersten Seite entlang eines ersten Wegs bewegen oder beim Herausbewegen zu der zweiten Seite entlang eines zweiten Wegs bewegen, wobei der erste Weg in einen ersten Auffangbehälter und der zweite Weg in einen zweiten Auffangbehälter mündet.

Die erfindungsgemäße Ausschleusevorrichtung kann ein einziges Ausschleusemittel oder mehrere Ausschleusemittel aufweisen. Weist die erfindungsgemäße Ausschleusevorrichtung nur ein einziges Ausschleusemittel auf, so kann dieses die Produkte entlang des ersten und des zweiten Wegs ausschleusen. Weist die erfindungsgemäße Ausschleusevorrichtung zwei oder mehrere Ausschleusemittel auf, so kann ein Ausschleusemittel Produkte entlang des ersten Wegs und ein weiteres Ausschleusemittel Produkte entlang des zweiten Wegs ausschleusen. Das Ausschleusen kann beispielsweise mittels eines Schiebers oder einer Blasdüse erfolgen.

Der erste Aufnahmebehälter ist vorzugsweise auf der ersten Seite benachbart zu dem Transportmittel angeordnet. Zum Empfangen der Produkte weist der erste Auffangbehälter eine Aufnahmeöffnung auf, über die das zu der ersten Seite aus dem Förderweg ausgeschleuste Produkt in den ersten Auffangbehälter gelangen kann.

In einer Ausgestaltung der erfindungsgemäßen Ausschleusevorrichtung kann der zweite Weg unter dem Transportmittel hindurch in den zweiten Auffangbehälter führen. Dadurch können die mindestens zwei Auffangbehälter gemeinsam auf der gleichen Seite des Transportmittels platzsparend angeordnet werden. Dies gewährleistet auch die Zugänglichkeit zu beiden Auffangbehältern von der Operatorseite.

In einer Ausgestaltung der Erfindung kann der zweite Auffangbehälter sich räumlich in der Richtung Y erstrecken, vorzugsweise so, dass sich zumindest ein Teil des zweiten Auffangbehälters unterhalb des Transportmittels befindet.

In einer Ausgestaltung der erfindungsgemäßen Ausschleusevorrichtung können die Produkte auf dem zweiten Weg über eine Rutsche in den zweiten Auffangbehälter geführt werden. Dafür ist eine Aufnahmeöffnung der Rutsche vorzugsweise auf der zweiten Seite benachbart zu dem Transportmittel angeordnet. Die Rutsche kann in der Form einer einseitig offenen Rutsche oder zumindest teilweise in der Form eines geschlossenen Kanals vorliegen. Aus bestimmten Gründen kann die Form eines geschlossenen Kanals bevorzugt sein.

Die Anordnung der mindestens zwei Auffangbehälter auf der gleichen Seite der gegenüberliegenden Seiten des Förderwegs hat den Vorteil, dass die in den Auffangbehältern gesammelten Produkte von nur einer Seite, der Operatorseite, des Inspektionssystems entnommen werden können. In einer Ausgestaltung der Erfindung können die mindestens zwei Auffangbehälter hierfür jeweils mindestens eine Entnahmeöffnung aufweisen, die jeweils so ausgebildet ist, dass ein Bedienpersonal die Produkte aus beiden Auffangbehältern von der gleichen Seite (Operatorseite) entnehmen kann.

In einer Ausgestaltung der erfindungsgemäßen Ausschleusevorrichtung kann sich der zweite Auffangbehälter in der Querrichtung Y unter dem Transportmittel hindurch bis auf die zweite Seite des Transportmittels erstrecken. Vorzugsweise erstreckt sich der zweite Auffangbehälter in der Querrichtung Y über den Rand des Transportmittels hinaus. Dadurch kann ein zu der zweiten Seite des Transportmittels ausgeschleustes Produkt in Richtung Z, beispielsweise über einen Fallschacht, in den zweiten Auffangbehälter gelangen. Der Fallschacht kann ein Teil des zweiten Auffangbehälters sein. Eine Öffnung des Fallschachts zum Aufnehmen der Produkte befindet sich vorzugsweise benachbart zur zweiten Seite des Transportmittels. Der zweite Auffangbehälter kann zusätzlich zu der Entnahmeöffnung auf der ersten Seite des Transportmittels eine Entnahmeöffnung für die Produkte auf der zweiten Seite des Transportmittels enthalten.

In einer separaten Ausführungsform betrifft die vorliegende Erfindung auch eine Ausschleusevorrichtung zum Ausschleusen von diskreten Produkten aus einem Produktstrom, mit einem Transportmittel, über das ein Förderweg zum Fördern von Produkten in einer Förderrichtung X führt, und mit mindestens einem Ausschleusemittel zum Ausschleusen der Produkte aus dem Förderweg wahlweise zu einer der zwei gegenüberliegenden Seiten des Transportmittels, die sich jeweils in Querrichtung Y zur Förderrichtung X befinden, und mit mindestens einem Auffangbehälter zum Aufnehmen der von dem Ausschleusemittel aus dem Förderweg ausgeschleusten Produkte. Im Folgenden werden die zwei gegenüberliegenden Seiten als "erste und zweite Seite" bezeichnet. Die Ausschleusevorrichtung in dieser separaten Ausführungsform ist dadurch gekennzeichnet, dass sich der Auffangbehälter in der Querrichtung Y unter dem Transportmittel von der ersten Seite zu der zweiten Seite des Transportmittels erstreckt. Vorzugsweise erstreckt sich der Auffangbehälter in der Querrichtung Y auf der zweiten Seite über den Rand des Transportmittels hinaus. Dadurch kann ein zu der zweiten Seite des Transportmittels ausgeschleustes Produkt in Richtung Z, beispielsweise über einen Fallschacht, in den zweiten Auffangbehälter gelangen. Der Fallschacht kann ein Teil des Auffangbehälters sein. Eine Öffnung des Fallschachts zum Aufnehmen der Produkte befindet sich vorzugsweise benachbart zur zweiten Seite des Transportmittels. Der Auffangbehälter kann eine Entnahmeöffnung für die Produkte auf der zweiten Seite des Transportmittels enthalten. Alternativ oder zusätzlich kann der Auffangbehälter eine Entnahmeöffnung auf der ersten Seite des Transportmittels aufweisen. Alle weiter oben genannten Ausgestaltungen und bevorzugten Ausführungsformen der hierin zuerst beschriebenen Ausschleusevorrichtung können mit der Ausschleusevorrichtung der separaten Ausführungsform kombiniert werden, sofern sie sich nicht gegenseitig ausschließen.

Die vorliegende Erfindung soll im Folgenden anhand mehrerer Figuren beispielhaft erläutert werden.
- Fig. 1:: Figur 1 zeigt schematisch eine erfindungsgemäße Ausschleusevorrichtung.
- Fig. 2:: Figur 2 zeigt eine Inspektionsanlage mit erfindungsgemäßer Ausschleusevorrichtung in Schrägsicht.
- Fig. 3:: Figur 3 zeigt einen Schnitt durch die Inspektionsanlage nach Fig. 2 in Seitenansicht mit Blick entlang der Förderrichtung.

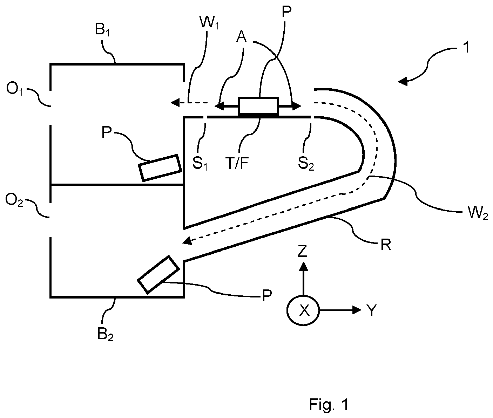

Die in Fig. 1 gezeigte Ausschleusevorrichtung 1 weist ein Transportmittel T auf, über das ein Förderweg F führt. In der Fig. 1 verläuft der Förderweg F entlang der Förderrichtung X, die sich senkrecht zur Abbildungsebene erstreckt. Das Transportmittel T ist hier beispielsweise ein Förderband. Die auf dem Förderband befindlichen Produkte P können mit einem Ausschleusemittel A entweder zu der einen Seite S₁ des Förderwegs F, oder zu der gegenüberliegenden Seite S₂ des Förderwegs F bewegt werden. Das Ausschleusemittel A ist in der Fig. 1 nicht gezeigt, sondern nur die Ausschleuserichtungen (Pfeile in Querrichtung Y), in die das Ausschleusemittel A die Produkte P schieben kann. Über einen ersten Weg W₁ kann ein Produkt P in einen ersten Auffangbehälter B₁ gelangen. Der erste Auffangbehälter B₁ ist hierfür benachbart zu dem Transportmittel T auf dessen erster Seite S₁ angeordnet. Das Produkt P kann aber auch durch seitliches Herausbewegen aus dem Förderweg F zur gegenüberliegenden Seite S₂ einen zweiten Weg W₂ beschreiten. Hierfür schiebt das Ausschleusemittel A das Produkt P zur Seite S₂ des Transportmittels T, an der eine Rutsche R benachbart ist, über die das Produkt P in einen zweiten Auffangbehälter B₂ gelangen kann. Die Wege W₁ und W₂ sind in Fig. 1 mit gestrichelten Pfeilen angedeutet. Die Rutsche R führt unterhalb des Transportmittels T hindurch, so dass die Produkte P über den Weg W₂ in den unterhalb des Auffangbehälters B₁ angeordneten Auffangbehälter B₂ gelangen können. Auf diese Weise ist es möglich, durch wahlweises Herausschieben zu der ersten Seite S₁ oder zu der zweiten Seite S₂ die Produkte P in übereinander angeordnete Auffangbehälter B₁ und B₂ zu überführen bzw. zu sortieren. Durch die Rutsche R ist es somit möglich, die beiden Auffangbehälter B₁ und B₂ in platzsparender Weise in Richtung Z übereinander anzuordnen. Dies hat den weiteren Vorteil, dass die Produkte P aus den Auffangbehältern B₁ und B₂ von der gleichen Seite des Transportmittels T entnommen werden können.

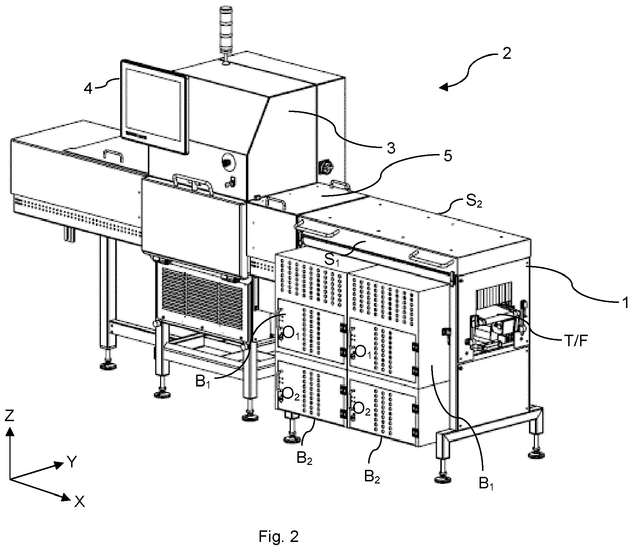

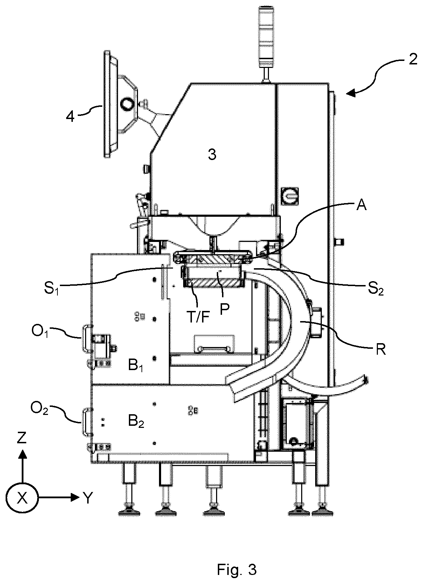

Die Fig. 2 und 3 zeigen eine Inspektionsanlage 2 mit einer erfindungsgemäßen Ausschleusevorrichtung 1. Entlang der Förderrichtung X verläuft der Förderweg F eines Transportmittels T in Form eines Förderbands. Die Inspektionsanlage 2 weist neben der erfindungsgemäßen Ausschleusevorrichtung 1 eine Röntgenvorrichtung 3 auf. Durch die Röntgenvorrichtung 3 können spezielle Produkteigenschaften, z. B. Fremdkörperkontamination, festgestellt werden. Je nach festgestellter Produkteigenschaft können die auf dem Förderweg F transportierten Produkte P nach vorbestimmten Kriterien entweder weiter entlang des Förderwegs F transportiert werden oder in die Auffangbehälter B₁ oder B₂ ausgeschleust werden. Wie aus Fig. 2 ersichtlich, weist die dargestellte Inspektionsanlage 2 jeweils zwei erste Auffangbehälter B₁ und zwei zweite Auffangbehälter B₂ auf. Auf diese Weise können an zwei unterschiedlichen Stellen des Förderwegs F Produkte P ausgeschleust werden. Die beiden zweiten Auffangbehälter B₂ sind jeweils in der Richtung Z unterhalb der beiden ersten Behälter B₁ angeordnet. Durch wahlweises Ausschleusen in der Querrichtung Y zur ersten Seite S₁ oder zur zweiten Seite S₂ des Förderwegs F mittels eines Ausschleusemittels A können Produkte jeweils entweder in den ersten Auffangbehälter B₁ oder in den zweiten Auffangbehälter B₂ gelangen. Die beiden ersten Auffangbehälter B₁ sind dabei benachbart zu dem Transportmittel T an dessen erster Seite S₁ angeordnet. Die beiden zweiten Auffangbehälter B₂ erstrecken sich jeweils in Richtung Y bis unterhalb des Transportmittels T. Die in Richtung der zweiten Seite S₂ ausgeschleusten Produkte P gelangen jeweils über eine eigene Rutsche R in die zweiten Auffangbehälter B₂. Die Rutsche R führt zumindest teilweise unterhalb des Transportmittels T hindurch. Auf diese Weise sind die beiden Auffangbehälter B₁ und B₂ jeweils so angeordnet, dass sie von der Operatorseite über die Entnahmeöffnungen O₁ und O₂ zugänglich sind. Die Operatorseite ist identisch zu der ersten Seite S₁. Die Inspektionsanlage 2 kann auf der Operatorseite auch ein Bedienterminal 4 für das Bedienpersonal aufweisen. Weiterhin kann die Inspektionsanlage 2 eine Waage 5 zur Erfassung des Produktgewichts aufweisen.

### Liste der Bezugszeichen:

- 1: Ausschleusevorrichtung
- 2: Inspektionsanlage
- 3: Röntgenvorrichtung
- P: Produkt
- T: Transportmittel
- F: Förderweg
- A: Ausschleusemittel
- S₁: erste Seite des Förderwegs (Operatorseite)
- S₂: zweite Seite des Förderwegs
- B₁: erster Auffangbehälter
- B₂: zweiter Auffangbehälter
- W₁: erster Weg
- W₂: zweiter Weg
- O₁: Entnahmeöffnung des ersten Auffangbehälters
- O₂: Entnahmeöffnung des zweiten Auffangbehälters
- R: Rutsche
- X: Förderrichtung
- Y: Querrichtung
- Z: Richtung senkrecht zur Ebene, die von Förderrichtung und Querrichtung aufgespannt wird
- 4: Bedienterminal
- 5: Waage

## Patentansprüche

1. Ausschleusevorrichtung (1) zum Ausschleusen von diskreten Produkten (P) aus einem Produktstrom,
a) mit einem Transportmittel (T), über das ein Förderweg (F) zum Fördern von Produkten (P) in einer Förderrichtung (X) führt, und
b) mit mindestens einem Ausschleusemittel (A) zum Ausschleusen der Produkte (P) aus dem Förderweg (F) wahlweise zu einer der zwei gegenüberliegenden Seiten (S₁, S₂) des Transportmittels (T), die sich jeweils in Querrichtung (Y) zur Förderrichtung (X) befinden, und
c) mit mindestens zwei Auffangbehältern (B₁, B₂) jeweils zum Aufnehmen der von dem Ausschleusemittel (A) aus dem Förderweg (F) ausgeschleusten Produkte (P),
**dadurch gekennzeichnet,**
d) **dass** die mindestens zwei Auffangbehälter (B₁, B₂) in einer Richtung (Z) zumindest teilweise übereinander angeordnet sind, wobei sich die Richtung (Z) senkrecht zu der Förderrichtung (X) und senkrecht zu der Querrichtung (Y) erstreckt, und dass die mindestens zwei Auffangbehälter (B₁, B₂) so angeordnet sind, dass die Produkte (P) aus beiden Auffangbehältern (B₁, B₂) von der gleichen Seite des Transportmittels (T) entnommen werden können.

2. Ausschleusevorrichtung (1) nach Anspruch 1, worin alle der mindestens zwei Auffangbehälter (B₁, B₂) zumindest teilweise auf der gleichen Seite der zwei gegenüberliegenden Seiten (S₁, S₂) des Transportmittels (T) angeordnet sind.

3. Ausschleusevorrichtung (1) nach Anspruch 1 oder 2, die so gestaltet ist, dass sich die Produkte (P) beim Ausschleusen aus dem Förderweg (F) zu der Seite (S₁) entlang eines ersten Wegs (W₁) oder beim Ausschleusen aus dem Förderweg (F) zu der Seite (S₂) entlang eines zweiten Wegs (W₂) bewegen, wobei der erste Weg (W₁) in einen ersten Auffangbehälter (B₁) und der zweite Weg (W₂) in einen zweiten Auffangbehälter (B₂) führt.

4. Ausschleusevorrichtung (1) nach Anspruch 3, worin der erste Auffangbehälter (B₁) auf der Seite (S₁) benachbart zu dem Transportmittel (T) angeordnet ist.

5. Ausschleusevorrichtung nach Anspruch 3 oder 4, worin der zweite Weg (W₂) unter dem Transportmittel (T) hindurch in den zweiten Auffangbehälter (B₂) führt.

6. Ausschleusevorrichtung (1) nach einem der Ansprüche 3 bis 5, worin die Produkte (P) auf dem zweiten Weg (W₂) über eine Rutsche (R) in den zweiten Behälter (B₂) geführt werden.

7. Ausschleusevorrichtung nach Anspruch 6, worin die Rutsche (R) wenigstens teilweise die Form eines geschlossenen Kanals aufweist.

8. Ausschleusevorrichtung nach einem der Ansprüche 1 bis 4, worin sich der zweite Auffangbehälter (B₂) in der Querrichtung (Y) unter dem Transportmittel (T) hindurch bis auf die zweite Seite (S₂) des Transportmittels (T) erstreckt.

9. Ausschleusevorrichtung (1) nach einem der Ansprüche 1 bis 8, worin die Auffangbehälter (B₁, B₂) jeweils mindestens eine Entnahmeöffnung (E₁, E₂) aufweisen, die jeweils so angeordnet ist, dass ein Bedienpersonal die Produkte (P) aus den mindestens zwei Auffangbehältern (B₁, B₂) von der gleichen Seite, vorzugsweise von der Operatorseite, entnehmen kann.

10. Verwendung einer Ausschleusevorrichtung gemäß einem der Ansprüche 1 bis 9 in Inspektionssystemen, welche eine Waage, insbesondere eine selbsttätige Kontrollwaage und/oder ein Inspektionsgerät mit Röntgen- oder Terahertzstrahlen und/oder ein optisches Kontrollsystem zur Codeerkennung auf Produkten oder deren Verpackungen aufweisen.

## Claims

1. Extractor device (1) for extracting discrete products (P) from a product stream,
a) having a transport means (T) over which a conveyor path (F) leads for conveying products (P) in a conveying direction (X), and
b) having at least one extractor means (A) for extracting the products (P) from the conveying path (F) selectively to one of the two opposite sides (Si, S₂) of the transport means (T), which are each located in the transverse direction (Y) relative to the conveying direction (X), and
c) having at least two collecting containers (B₁, B₂) each for receiving the products (P) extracted from the conveying path (F) by the extractor means (A),
**characterized in that**
d) the at least two collecting containers (B₁, B₂) are arranged at least partially one above the other in a direction (Z), wherein the direction (Z) extends perpendicularly to the conveying direction (X) and perpendicularly to the transverse direction (Y), and **in that** the at least two collecting containers (B₁, B₂) are arranged in such a way that the products (P) can be removed from both collecting containers (B₁, B₂) from the same side of the transport means (T).

2. Extractor device (1) according to claim 1, wherein all of said at least two collecting containers (B₁, B₂) are arranged at least partially on the same side of the two opposite sides (Si, S₂) of the transport means (T).

3. Extractor device (1) according to claim 1 or 2, which is designed such that the products (P) move to the side (S₁) along a first path (W₁) when being extracted from the conveying path (F) or to the side (S₂) along a second path (W₂) when being extracted from the conveying path (F), wherein the first path (W₁) leads into a first collecting container (B₁) and the second path (W₂) leads into a second collecting container (B₂).

4. Extractor device (1) according to claim 3, wherein the first collecting container (B₁) is arranged on the side (S₁) adjacent to the transport means (T).

5. Extractor device according to claim 3 or 4, wherein the second path (W₂) leads under the transport means (T) into the second collecting container (B₂).

6. Extractor device (1) according to one of claims 3 to 5, wherein the products (P) are guided on the second path (W₂) via a chute (R) into the second container (B2).

7. Extractor device according to claim 6, wherein the chute (R) is at least partially in the form of a closed channel.

8. Extractor device according to one of claims 1 to 4, wherein the second collecting container (B₂) extends in the transverse direction (Y) under the transport means (T) up to the second side (S₂) of the transport means (T).

9. Extractor device (1) according to one of claims 1 to 8, wherein the collecting containers (B₁, B₂) each have at least one removal opening (E₁, E₂), which is arranged in each case in such a way that an operator can remove the products (P) from the at least two collecting containers (B₁, B₂) from the same side, preferably from the operator side.

10. Use of an extractor device according to one of claims 1 to 9 in inspection systems comprising a scale, in particular an automatic checkweigher and/or an inspection device with X-rays or terahertz rays and/or an optical control system for code recognition on products or their packages.

## Revendications

1. Dispositif d'évacuation (1) permettant d'évacuer des produits discrets (P) d'un flux de produits,
a) comportant un moyen de transport (T), par lequel un chemin de transport (F) conduit au transport de produits (P) dans une direction de transport (X), et
b) comportant au moins un moyen d'évacuation (A) permettant d'évacuer les produits (P) du chemin de transport (F) sélectivement vers l'un des deux côtés opposés (Si, S₂) du moyen de transport (T) qui se trouvent chacun dans la direction transversale (Y) par rapport à la direction de transport (X), et
c) comportant au moins deux récipients de collecte (B₁, B₂) chacun destinés à recevoir les produits (P) évacués du chemin de transport (F) par le moyen d'évacuation (A),
**caractérisé**
d) **en ce que** les au moins deux récipients de collecte (B₁, B₂) sont au moins en partie disposés l'un au-dessus de l'autre dans une direction (Z), la direction (Z) s'étendant perpendiculairement à la direction de transport (X) et perpendiculairement à la direction transversale (Y), et en ce que les au moins deux récipients de collecte (B₁, B₂) sont disposés de telle manière que les produits (P) puissent être extraits des deux récipients de collecte (B₁, B₂) du même côté du moyen de transport (T).

2. Dispositif d'évacuation (1) selon la revendication 1, dans lequel tous les au moins deux récipients de collecte (B₁, B₂) sont disposés au moins en partie du même côté des deux côtés opposés (S₁, S₂) du moyen de transport (T).

3. Dispositif d'évacuation (1) selon la revendication 1 ou 2, qui est conçu de telle manière que les produits (P) se déplacent le long d'un premier chemin (W₁) lors de l'évacuation du chemin de transport (F) vers le côté (S₁) ou le long d'un second chemin (W₂) lors de l'évacuation du chemin de transport (F) vers le côté (S₂), le premier chemin (W₁) menant dans un premier récipient de collecte (B₁) et le second chemin (W₂) menant dans un second récipient de collecte (B₂).

4. Dispositif d'évacuation (1) selon la revendication 3, dans lequel le premier récipient de collecte (B₁) est disposé sur le côté (S₁) adjacent au moyen de transport (T).

5. Dispositif d'évacuation selon la revendication 3 ou 4, dans lequel le second chemin (W₂) mène sous le moyen de transport (T) dans le second récipient de collecte (B₂).

6. Dispositif d'évacuation (1) selon l'une des revendications 3 à 5, dans lequel les produits (P) sont guidés sur le second chemin (W₂) par l'intermédiaire d'une goulotte (R) dans le second récipient de collecte (B₂).

7. Dispositif d'évacuation selon la revendication 6, dans lequel la goulotte (R) présente au moins en partie la forme d'un canal fermé.

8. Dispositif d'évacuation selon l'une des revendications 1 à 4, dans lequel le second récipient de collecte (B₂) s'étend dans la direction transversale (Y) sous le moyen de transport (T) jusqu'au second côté (S₂) du moyen de transport (T).

9. Dispositif d'évacuation (1) selon l'une des revendications 1 à 8, dans lequel les récipients de collecte (B₁, B₂) présentent chacun au moins une ouverture d'évacuation (E₁, E₂) qui est respectivement disposée de telle manière qu'un opérateur puisse extraire les produits (P) des au moins deux récipients de collecte (B₁, B₂) du même côté, de préférence du côté de l'opérateur.

10. Utilisation d'un dispositif d'évacuation selon l'une des revendications 1 à 9 dans des systèmes d'inspection qui comportent une balance, en particulier une balance de contrôle automatique et/ou un appareil d'inspection à rayons X ou térahertz et/ou un système de contrôle optique pour la reconnaissance de code sur les produits ou sur leurs emballages.
